Europäisches Patentamt

European Patent Office

Office européen des brevets

(11) Publication number: **0 476 153 A1**

## EUROPEAN PATENT APPLICATION
### published in accordance with Art. 158(3) EPC

(21) Application number: 91906977.3

(22) Date of filing: **10.04.91**

(86) International application number:
**PCT/JP91/00472**

(87) International publication number:
**WO 91/15326 (17.10.91 91/24)**

(51) Int. Cl.⁵: **B23H 7/36**

(30) Priority: **10.04.90 JP 93221/90**

(43) Date of publication of application:
**25.03.92 Bulletin 92/13**

(84) Designated Contracting States:
**CH DE LI**

(71) Applicant: **FANUC LTD.**
**3580, Shibokusa Aza-Komanba, Oshino-mura**
**Minamitsuru-gun, Yamanashi 401-05(JP)**

(72) Inventor: **TSUTSUMI, Toshiro, Fanuc Dai-3**
**Vira-karamatsu, 3527-1, Shibokusa,**
**Oshino-mura**
**Minamitsuru-gun, Yamanashi 401-05(JP)**

(74) Representative: **Billington, Lawrence Emlyn et al**
**Haseltine Lake & Co Hazlitt House 28,**
**Southampton Buildings Chancery Lane**
**London WC2A 1AT(GB)**

(54) INVERTER-CONTROLLED DEVICE FOR COOLING CUTTING FLUID.

(57) An inverter-controlled device exhibits excellent response to a change in the temperature of cutting fluid. The cooling device includes either a differential amplifier circuit (23) that receives an output signal from a temperature selector (21) for setting a desired fluid temperature and receives an output signal from a temperature sensor (22) for the actual fluid temperature, or a differential amplifier circuit (53) receives the voltage across a resistor (52) in a discharge circuit (40), the voltage representing the machining current. An inverter (33) is controlled by an inverter control circuit (34) responsive to a temperature control signal (Vc, Vc') sent from the differential amplifier circuit (23, 53). The control signal is corresponding to the difference between the output of the temperature selector and the output of the temperature sensor or to the voltage across the current-detecting resistor. The number of revolutions of a motor (11) that determines the cooling ability of a cooling unit (10, 70) is quickly controlled by the inverter in response to a change in the temperature of cutting fluid, and the fluid is quickly adjusted at a predetermined temperature.

FIG.1

## Technical Field

The present invention relates to a machining fluid cooling apparatus for use in an electrical discharge machine, and more particularly, to a machining fluid cooling apparatus with inverter control which has an excellent response to a change in the temperature of machining fluid.

## Background Art

In wire discharge machining of a type applying a pulsive voltage to a gap between a wire electrode (hereinafter referred to as wire) which vertically travels and a workpiece, while horizontally moving them relative to each other, to thereby intermittently generate spark discharge between them, the wire can be broken if the temperature at that part of the wire which corresponds to the discharge gap is excessively raised, and, the resistivity of the machining fluid is increased if the machining fluid temperature is raised, so that the machining speed is lowered.

To obviate such inconveniences, a conventional machining fluid supplying apparatus for circulating the machining fluid between itself and upper and lower nozzles through which the machining fluid is injected to the discharge machining zone is provided with a cooling apparatus for cooling the machining fluid, and a thermostat which responds to the machining fluid temperature for an ON-OFF action. The cooling apparatus is on-off controlled by the thermostat in dependence on the machining fluid temperature in such a manner that the machining fluid temperature is maintained within a predetermined range.

However, the response of such a thermostat to a change in the machining fluid temperature is insufficient. Thus, the machining fluid temperature is liable to be dislocated from the predetermined range especially when the discharge machining is carried out under such a machining condition that a large amount of heat is generated. Hence, breakage of wire and drop in machining speed and machining accuracy tend to occur.

## Disclosure of the Invention

The object of the present invention is to provide a machining fluid cooling apparatus with inverter control, which has an excellent response to a change in machining fluid temperature.

To achieve the aforementioned object, according to one aspect of the present invention, a machining fluid cooling apparatus with inverter control comprises cooling means, having a motor as a drive source, for cooling machining fluid by use of refrigerant, signal generating means for generating a temperature control signal, and control means, having an inverter responsive to the temperature control signal, for controlling the drive of the motor of the cooling means. The signal generating means includes a temperature setter for setting a set value of the machining fluid temperature, and a temperature sensor for detecting an actual value of the machining fluid temperature, and is operable to generate an output signal, as the temperature control signal, representative of a deviation between the set value and the actual value of the machining fluid temperature.

According to another aspect of the present invention, the machining fluid cooling apparatus with inverter control comprises cooling means, signal generating means, and control means. The signal generating means includes an electric current sensor for detecting a value of a machining electric current, and is operable to generate an output signal, as the temperature control signal, representative of the detected machining electric current value.

As mentioned above, according to the present invention, since the motor of the cooling means is drivingly controlled by the inverter which responds to the temperature control signal representative of the deviation between the set value and the actual value of the machining fluid temperature or representative of the detected machining electric current value, it is possible to rapidly adjust the refrigerant discharge pressure in the cooling means in response to a change in the machining fluid temperature. Thus, the temperature of the cooling fluid can be always maintained within the predetermined range, so that breakage of wire, drop in machining speed and machining accuracy can be prevented.

## Brief Description of the Drawings

Fig. 1 is a schematic view showing a machining fluid cooling apparatus according to a first embodiment of the present invention; and

Fig. 2 is a schematic view showing a machining fluid cooling apparatus according to a second embodiment of the present invention.

## Best Mode for Carrying Out the Invention

A wire cut electric discharge machine on which a machining fluid cooling apparatus of the present invention is mounted is provided with upper and lower nozzles for injecting machining fluid toward a discharge gap between a wire and a workpiece, and a machining fluid supplying apparatus for circulating the machining fluid between itself and the nozzles.

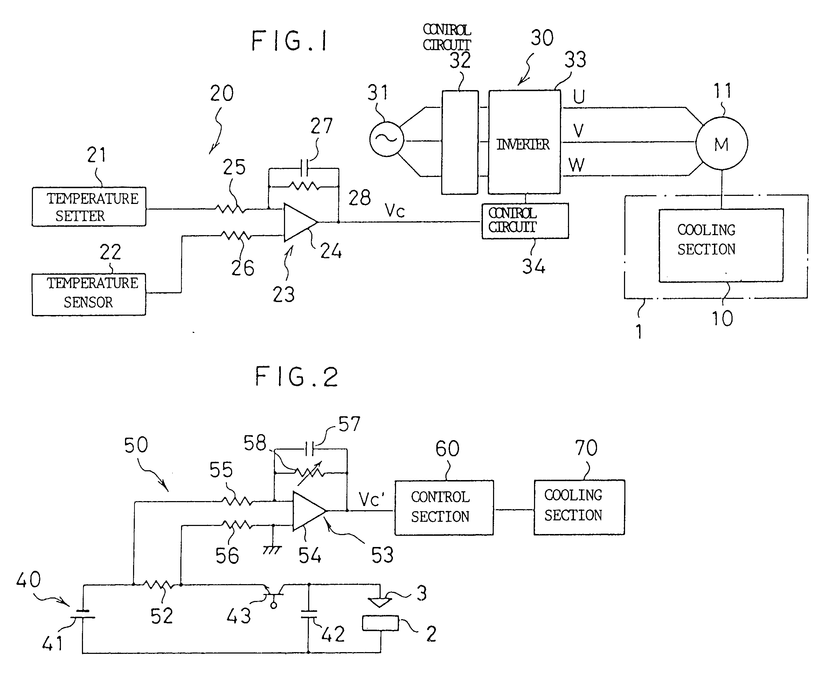

Referring to Fig. 1, the machining fluid cooling apparatus of a first embodiment of the present invention, which is disposed in the machining fluid supplying apparatus (not shown) of the electric discharge machine 1, is provided with a cooling section 10 for cooling machining fluid, a signal generator section 20 for generating a signal Vc for control of machining fluid temperature, and a control section 30 for adjusting a cooling ability of the cooling section 10 in dependence on the control signal Vc.

For example, the cooling section 10 has an evaporator for cooling the machining fluid through vaporization of refrigerant and heat exchange between the refrigerant and the machining fluid, a compressor for compressing the evaporated refrigerant, and the like. The compressor has a three-phase synchronous motor 11 as a drive source, and is operable to discharge the refrigerant at a discharge pressure which varies in dependence on to the motor rotation rate. Namely, the cooling section 10 is so arranged that its cooling ability can be variably adjusted. The motor 11 is provided with a position detector (not shown) for detecting the rotary position of the motor.

The signal generator section 20 includes a temperature setter 21 for automatically setting a set value of the machining fluid temperature in accordance with machining fluid temperature control data sent from a host controller, e.g., a numerical control unit (not shown), which is provided in the electric discharge machine and which operates in accordance with a machining program. The signal generator section 20 further includes a temperature sensor 22 disposed in the machining fluid supplying apparatus for detecting an actual value of the machining fluid temperature, and a differential amplifier circuit 23 for generating a temperature control signal Vc which is representative of a deviation between the set value and the actual value of the machining fluid temperature. An operational amplifier 24 of the differential amplifier circuit 23 has its first and second input terminals connected to an output terminal of the temperature setter 21 and that of the temperature sensor 22 through resistors 25 and 26, respectively, and an output terminal thereof connected through a parallel circuit of a capacitor 27 and a resistor 28 to the first input terminal of the amplifier circuit, and is operable to generate the voltage signal Vc for temperature control by amplifying the deviation between the output voltage of the temperature setter 21 and the output voltage of the temperature sensor 22.

The control section 30 includes a three-phase alternating current power source 31 consisting of R-, S- and T-phases, a rectifier circuit 32, an inverter 33, and an inverter control circuit 34 for controlling the inverter in accordance with the temperature control signal Vc supplied from the amplifier circuit 23 and the output signal of the position detector provided at the motor 11. The inverter 33 is arranged to, under the control of the inverter control circuit 34, control drive currents flowing through the U-, V- and W-phase windings of the motor 11, thereby variably controlling the rotational speed of the motor 11. The inverter 33 and the inverter control circuit 34 consist of, e.g., a transistor inverter and a transistor PWM control circuit, respectively.

In the following, the operation of the machining fluid cooling apparatus shown in Fig. 1 will be explained.

Upon start of discharge machining, when temperature data is sent from the numerical control unit to the temperature setter 21, a set value of the machining fluid temperature is automatically set at the setter 21. During the discharge machining, the machining fluid is injected to the discharge gap from the upper and lower nozzles, to thereby cool the workpiece and the wire, with the used machining fluid returned to the machining fluid supplying apparatus. The machining fluid is cooled at the machining fluid cooling apparatus of the machining fluid supplying apparatus, and is then supplied to the nozzles again. During this time, an actual value of the machining fluid temperature is detected by the temperature sensor 22 provided in the machining fluid supplying apparatus.

The differential amplifier circuit 23 receives an output voltage signal of the setter 21 representative of the set machining fluid temperature and an output voltage signal of the sensor 22 representative of the actual machining fluid temperature, and then delivers a voltage signal Vc for temperature control corresponding to the deviation of these voltage signals. The inverter control section 34 causes transistors (not shown) of the inverter 33 to be turned on and off in sequence in accordance with the control signal Vc and the output signal of the position detector. As a result, drive currents corresponding to the control signal Vc flow through the windings of the individual phases of the motor 11, so that the motor 11 rotates at a rotational rate corresponding to the control signal Vc. Thus, the refrigerant discharge pressure from the compressor of the cooling section 10 is rapidly and variably controlled in accordance with the temperature control signal Vc, and hence the cooling ability of the cooling section is rapidly adjusted so that the machining fluid temperature becomes the set value. That is, if the actual machining fluid temperature is higher than the set machining fluid temperature, the motor rotational rate is increased so that the cooling capacity (refrigerant discharge pressure) of the cooling section 10 is increased, whereby the actual machining fluid temperature is lowered. On the other hand, if the actual machining fluid temperature is lower than the set temperature, the motor rotational rate is lowered and hence the cooling ability is lowered, whereby the machining fluid temperature is raised.

With reference to Fig. 2, a machining fluid cooling apparatus of a second embodiment of the present invention will be explained.

As compared with the cooling apparatus of the first embodiment arranged to control the inverter 33 in accordance with the temperature control signal Vc representative of the deviation between the set value and the actual value of the machining fluid temperature, the cooling apparatus of the second embodiment is different therefrom in that it operates to control the inverter 33 in accordance with a temperature control signal Vc' representative of a value of a machining current which flows through the discharge gap and which is representative of an amount of heat generated by the discharge machining.

Referring to Fig. 2, the electric discharge machine on which the cooling apparatus is mounted has a capacitor discharge circuit 40 with transistor control for applying a pulsive voltage to the discharge gap between a workpiece 2 and a wire 3. The discharge circuit 40 has a direct current power source 41 whose positive and negative terminals are respectively connected to the workpiece 2 and the wire 3, a capacitor 42 whose both ends are respectively connected to a junction between the workpiece 2 and the direct current power source 41 and a junction between the wire 3 and the direct current power source 41, and a switching transistor 43 interposed between the negative terminal of the direct current power source 41 and the corresponding end of the capacitor 42. The discharge circuit 40 is operable to cause the transistor 43 to be turned on and off by means of a transistor control circuit (not shown), thereby controlling the charge and discharge of the capacitor 42.

The cooling apparatus has a signal generator section 50 which corresponds to the signal generator section 20 in Fig. 1. The signal generator section 50 is provided with an electric current detection resistor 52, as an electric current sensor, interposed between the discharge circuit 40 and the direct current power source 41 for detecting a value of a machining current flowing through the discharge circuit 40, and a differential amplifier circuit 53 for generating a temperature control signal Vc' representative of the detected machining current value.

The differential amplifier circuit 53 includes an operational amplifier 54 having first and second input terminals thereof connected across the current detection resistor 52 through resistors 55 and 56 and having an output terminal thereof connected to its first input terminal through a parallel circuit of a capacitor 57 and a variable resistor 58. The circuit 53 is arranged to generate the voltage signal Vc' for temperature control, representative of a machining current value, in dependence on the voltage across the current detection resistor 52. The variable resistor 58, which determines the amplification degree of the differential amplifier circuit 53, has its resistance which is set to a value to permit the differential amplifier circuit 53 to supply the control section with the control signal Vc' which is enough to maintain the machining fluid temperature at a predetermined temperature when a standard machining current flows through the discharge circuit 40.

The cooling apparatus further includes a control section 60, having an input terminal thereof connected to the output terminal of the differential amplifier circuit 53 and arranged in the same manner as the control section 30 shown in Fig. 1, and a cooling section 70 which is the same in arrangement as the cooling section 10 in Fig. 1.

In the following, the operation of the cooling apparatus shown in Fig. 2 will be explained.

While discharge machining is carried out under such a machining condition that a standard machining current flows through the discharge circuit 40, a standard voltage corresponding to the standard machining current is generated across the current detection resistor 52 of the signal generator section 50. In this case, under the control of the control section 60 which receives, from the signal generator section 50, the temperature control signal Vc' of the standard voltage value, the motor of the cooling section 70 is rotated at a standard rotational rate. As a result, the cooling section 70 operates in a manner providing a standard cooling ability, whereby the machining fluid temperature is adjusted to the predetermined temperature.

When the machining current is increased or decreased, as compared with the standard machining current, because of a change in the machining condition and so on, the voltage across the current detection resistor 52 increases or decreases, and the voltage value of the temperature control signal Vc' increases or decreases accordingly. As a result, the motor rotational rate, which determines the cooling ability of the cooling section 70, is increased or decreased. That is, when the machining current is increased and hence a quantity of heat generated at the discharge gap is increased with the discharge machining, the cooling ability of the cooling section 70 is increased so that the increase of the machining fluid temperature corresponding to the increase of the generated heat is canceled, whereby the machining fluid temperature is maintained at the predetermined temperature. On the other hand, when the machining current is decreased and the generated heat is decreased, the cooling ability is lowered, so that the decrease of the machining fluid temperature corresponding to the decrease of the generated heat is canceled, thereby maintaining the machining temperature at the predetermined temperature.

The present invention is not limited to the aforementioned first and second embodiments, and various modifications thereof may be made.

For example, although the present invention is applied to the wire cut electric discharge machine in the embodiments, the present invention may be also applied to a diesinking type electric discharge machine. Although the temperature setter 32 for automatically setting a set value of the machining temperature in accordance with the temperature control data sent from the numerical control unit is employed in the first embodiment, a manual setting type temperature setter may be used. Though a three-phase synchronous motor is used as a drive source of the cooling sections 10 and 70 and a transistor inverter and a transistor PWM control circuit are used in the first and second embodiments, a combination of other type of motor, other type of inverter and other type of inverter control circuit may be used.

**Claims**

1. A machining fluid cooling apparatus with inverter control, comprising:
   cooling means, having a motor as a drive source, for cooling machining fluid by use of refrigerant;
   signal generating means for generating a temperature control signal; and
   control means, having an inverter responsive to the temperature control signal, for controlling drive of said motor of said cooling means;
   wherein said signal generating means includes a temperature setter for setting a set value of a machining fluid temperature, and a temperature sensor for detecting an actual value of the machining fluid temperature, said signal generating means being operable to generate an output signal, as the temperature control signal, representative of a deviation between the set value and the actual value of the machining fluid temperature.

2. A machining fluid cooling apparatus with inverter control in claim 1, wherein said signal generating means further includes an amplifier for receiving an output signal of said temperature setter and an output signal of said temperature sensor, to generate the temperature control signal.

3. A machining fluid cooling apparatus with inverter control in claim 1 or 2, wherein said apparatus is mounted on a wire cut electric discharge machine.

4. A machining fluid cooling apparatus with inverter control, comprising:
   cooling means, having a motor as a drive source, for cooling machining fluid by use of refrigerant;
   signal generating means for generating a temperature control signal; and
   control means, having an inverter responsive to the temperature control signal, for controlling drive of said motor of said cooling means;
   wherein said signal generating means includes an electric current sensor for detecting a value of a machining current, said signal generating means being operable to generate an output signal, as the temperature control signal, representative of the detected machining current value.

5. A machining fluid cooling apparatus with inverter control in claim 4, wherein said signal generating means further includes an amplifier for receiving an output signal of said electric current sensor, to generate the temperature control signal, said amplifier having an element for variably adjusting its amplification degree.

6. A machining fluid cooling apparatus with inverter control in claim 4 or 5, wherein said apparatus is mounted on a wire cut discharge machine.

## FIG.1

TEMPERATURE SETTER 21

TEMPERATURE SENSOR 22

20

25

26

27

23

24

28

Vc

31

CONTROL CIRCUIT 32

INVERTER 33

CONTROL CIRCUIT 34

30

U
V
W

M 11

COOLING SECTION

1

10

## FIG.2

50

55

56

58

57

54

53

Vc'

CONTROL SECTION 60

COOLING SECTION 70

40

41

52

43

42

2

3

EP 0 476 153 A1

# INTERNATIONAL SEARCH REPORT

International Application No PCT/JP91/00472

## I. CLASSIFICATION OF SUBJECT MATTER (if several classification symbols apply, indicate all) [6]

According to International Patent Classification (IPC) or to both National Classification and IPC

Int. Cl$^5$ B23H7/36

## II. FIELDS SEARCHED

| Minimum Documentation Searched [7] | |
|---|---|
| Classification System | Classification Symbols |
| IPC | B23H7/36 |

| Documentation Searched other than Minimum Documentation to the Extent that such Documents are Included in the Fields Searched [8] |
|---|
| Jitsuyo Shinan Koho      1920 – 1991<br>Kokai Jitsuyo Shinan Koho    1971 – 1991 |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| X | JP, A, 61-297020 (Mitsubishi Electric Corp.), December 27, 1986 (27. 12. 86), (Family: none) | 1-3 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| June 10, 1991 (10. 06. 91) | June 24, 1991 (24. 06. 91) |
| International Searching Authority | Signature of Authorized Officer |
| Japanese Patent Office | |

Form PCT/ISA/210 (second sheet) (January 1985)